# NEW EUROPEAN PATENT SPECIFICATION

(11) **EP 2 951 023 B3**
(45) Date of publication of this specification: **23.10.2019**
(45) Mention of the grant of the patent: 18.10.2017
(21) Application number: 14702937.5
(22) Date of filing: 03.02.2014
(51) Int. Cl.: B42D 25/29, B42D 25/00, B42D 25/21

(54) **SECURITY DEVICES AND METHODS OF MANUFACTURE THEREOF**
SICHERHEITSELEMENTE UND VERFAHREN ZU IHRER HERSTELLUNG
DISPOSITIFS DE SÉCURITÉ ET PROCÉDÉS DE FABRICATION DE CEUX-CI

(30) Priority: 01.02.2013 GB 201301792
(43) Date of publication of application: 09.12.2015
(73) Proprietor: De La Rue International Limited, Basingstoke Hampshire RG22 4BS (GB)
(72) Inventor: HOLMES, Brian, Fleet Hampshire GU51 5HZ (GB)
(74) Representative: Gill Jennings & Every LLP
(86) International application number: PCT/GB2014/050282
(87) International publication number: WO 2014/118567

(56) References cited:
- EP-A1- 2 065 766
- WO-A1-01/62516
- WO-A1-95/27925
- WO-A1-2008/031170
- WO-A1-2011/017741
- WO-A2-2005/051675
- DE-A1- 3 744 650
- US-A- 5 658 411

## Description

The present invention relates to security devices for security documents such as banknotes, currency, identification documents, passports, cheques, visas, certificates and the like, and methods for their manufacture. In particular, the invention relates to security devices incorporating optically variable effect generating relief structures such as holograms and/or diffraction gratings. The disclosed methods and devices are particularly well adapted for integral formation of a security device on a security document having a transparent substrate, such as a polymer banknote.

Optically variable effect generating relief structures such as holograms and diffraction gratings have been used widely over the last few years to impart security to documents of value such as banknotes, credit cards, passports and the like. Conventionally, the structure is provided on a transfer foil and then hot stamped from the transfer foil onto the final document substrate. An early example of this approach is described in US-A-4728377. Such techniques work well with traditional security documents having substrates formed of paper, for example. However, it can prove difficult to adhere such articles to other types of substrate, such as polymer substrates. For instance, polymer-based banknotes typically comprise a substrate of polypropylene, which can withstand temperatures up to around 80 degrees C. Hot stamping methods commonly operate at higher temperatures, e.g. around 250 to 300 degrees C, which would cause damage to such substrates. Meanwhile, the use of cold adhesives has generally proved unsuccessful since the bond between polymer and security device is often not sufficiently robust.

In order to avoid such problems, alternative methods have been employed including the use of "cast-cure" resins. A curable material is applied to the polymer substrate and embossed with a desired relief structure. Simultaneously or subsequently, the material is cured, e.g. by exposure to UV radiation, in order to fix the relief structure. A metallic ink is then applied to the relief to provide a reflective layer, in order to render the optically variable effect visible. An example of such a method is disclosed in WO-A-2008/031170.

Whilst this technique results in strong adhesion between the substrate and security device, due to bonding between the polymeric substrate and curable resin, the quality of the resulting security device is typically not optimal. In particular, given the typically transparent nature of the polymer document substrate, it is desirable to make use of this by having the security device visible from both sides of the document (i.e. through the polymer substrate on at least one side of the device). However, techniques of the sort described above result in a device with reduced visual effect (e.g. poor diffractive replay) on one side of the device relative to the other. This is because only the side of the metallic ink which directly contacts the surface relief formed in the resin will conform faithfully to the relief and hence give rise to a strong optical effect. On the other side, the metallic ink may either fill in the relief (resulting in no optically variable effect) or follow its contours only approximately, giving rise to a weaker, more diffuse effect.

In accordance with the present invention, a method of manufacturing a security device, comprises:
(a) providing a transparent substrate;
(b) applying a curable transparent material to a region of the substrate;
(c) in a first curing step, partially curing the curable transparent material by exposure to curing energy;
(d) applying a layer of a reflection enhancing material to the curable transparent material;
(e) forming the partially cured transparent material and the layer of reflection enhancing material such that both surfaces of the layer of reflection enhancing material follow the contours of a optically variable effect generating relief structure;
(f) in a second curing step, fully curing the formed transparent material by exposure to curing energy such that the relief structure is retained by the formed transparent material.

By applying a layer of reflection enhancing material to a partially-cured transparent material and then impressing a surface relief into both materials, the result is that both opposing surfaces of the reflection enhancing layer will faithfully confirm to the relief structure. As such, both sides of the device will exhibit optically variable effects which are substantially equal in quality (e.g. brightness and focus) to one another. This provides a particularly strong visual impact and hence increases the overall security level of the document to which the device is applied.

By "transparent" it is meant that the substrate and curable material are at least visually semi-transparent, i.e. they can be seen through by the human eye. One or both of the substrate and curable material may also be transparent to non-visible wavelengths as discussed below. Either material may also contain a coloured tint (visible or non-visible).

It should be noted that certain of the steps (a) to (f) may be performed in an order different from that presented above, and certain steps may overlap one another or be performed simultaneously. For example, in a preferred embodiment, the steps are performed in the order specified above. However, in another preferred example, the layer of reflection enhancing material could be applied before the curable transparent material is partially cured (i.e. steps (c) and (d) could be reversed in order). Further, each curing step may at least partially overlap other step(s). For example, the first curing step (c) could take place simultaneously with the application of the curable material (step (b)), or a latter part of that step, and/or simultaneously with the application of the reflection enhancing material (step (d)), or a first part of that step. The first curing step (c) could continue up to the point at which the relief structure is formed in step (e).

Similarly, the second curing step (f) may be performed simultaneously during forming of the relief (step (e)), or overlap with a latter part of that step (i.e. performed simultaneously, at least in part). The second curing step could commence at the point at which the relief structure is formed in step (e). In this case, if the first curing step continues up to the same point, there may be no interval between the first and second curing steps. However, in preferred embodiments there is an interval between the first and second curing steps during which no curing energy (e.g. radiation) is applied to the curable material.

Nonetheless, in all cases the forming of the relief structure (step (e)) takes place after the application of the reflection enhancing material (step (d)) such that the two sides of the reflection enhancing material follow the contours of the relief. Further, the curable transparent material has been partially cured (step (c)) by the point at which the relief is formed (step (e)) and more preferably by the point at which the reflection enhancing material is applied (step (d)), such that the curable transparent material is sufficiently robust so as to withstand the application of a further material layer thereto.

The curable transparent material is "fully cured" when it no longer possesses thermoplastic properties - i.e. it cannot flow even under the application of heat and/or pressure. Thus, the material will retain the relief structure formed in step (e) and will not "relax" even if heated. The material becomes fully cured during (i.e. by the end of) step (f). The material is "partially cured" when it is cured relative to the form it which it is applied to the substrate in step (b), but is not yet fully cured. Thus, the partially cured material retains some thermoplastic properties and can be formed, at least under heat and/or pressure.

The degree of curing achieved during step (c) is preferably selected depending on the materials used and conditions under which the relief is to be formed in step (e), in order to achieve optimum forming, i.e. accurate replication of the surface relief. The precise degree of curing carried out in step (c) will therefore vary according to the particular implementation and may be selected through empirical tests as discussed further below. However, in preferred embodiments, step (c) comprises exposing the curable transparent material to between 10 and 70% of the total curing energy dose required to fully cure the curable transparent material, preferably between 30 and 50%. Since the degree of curing will generally be approximately proportional to the dose of curing energy applied, this corresponds to the material becoming between 10 and 70% cured, preferably between 30 and 50% cured (where 100% represents "fully cured") in step (c). It should be noted that whilst in practice the curable material may be applied to the substrate in step (b) in a state which is already partially cured relative to some earlier stage of handling, for the purposes of the present disclosure the form in which the material is applied to the substrate is taken to represent 0% cured.

The curable transparent material may be of a type which can be cured by the application of any form of energy, such as heat, UV radiation or electron beam radiation. However, in most preferred embodiments, the curable transparent material is radiation-curable, preferably UV-curable, and the curing energy is radiation, preferably UV radiation. The application of radiation can generally be more accurately controlled than that of heat, e.g. through the use of appropriately directed radiation sources and/or masks. It should be noted that radiation wavelengths other than UV may be used. However, it is preferred that the substrate is at least semi-transparent to the curing energy (e.g. to the relevant radiation wavelength(s)), so that the energy can be applied to the curable material through the substrate. Polypropylene, for example, is generally transparent to UV wavelengths.

As mentioned above, the curable transparent material is at least visually semi-transparent (i.e. transmits wavelengths in the visible range) such that the optical effect of the device can be viewed through the material. However, the material need not transmit all visible wavelengths equally and in preferred examples, the material further comprises an optically effective substance, preferably a visible colourant, or a luminescent, phosphorescent or fluorescent material. This further enhances the security level of the device and can be used to cause the optically variable effect to be seen in a different colour when viewed from one side of the device (through the curable material) as opposed to the other. Such optically effective substances could additionally, or alternatively be disposed in any of the other layers of the device, including the substrate and/or the reflection enhancing layer.

In many implementations, a single type of curable transparent material will be applied in the region. However, in some preferred embodiments, step (b) comprises applying two or more curable transparent materials to the region of the substrate in a pattern, one or more of the curable transparent materials comprising an optically effective substance such that the two or more curable transparent materials have different optical characteristics, preferably visibly different under at least visible or non-visible illumination. By providing a pattern which is detectable either to the naked eye or to a machine in this layer, the security level of the device is further increased. If two or more curable materials are provided it is preferred that they are each adapted to be cured by the same type of curing energy and most advantageously at the same rate as one another, so that both achieve the same curing level after application of a dose of energy.

The reflection enhancing material could comprise any one or more reflective materials. In particularly preferred embodiments, the reflection enhancing material comprises one or more of:
a dispersion of reflective particles in a binder, preferably a metallic ink;
a metal or alloy, preferably vapour-deposited; or
a material having a refractive index which differs from that of the curable transparent material by at least 0.3 (more preferably at least 0.5). Examples of suitable materials are well known in the art and include zinc sulphide (most commonly), titanium dioxide and zirconium dioxide. More generally such materials may be referred to as "high refractive index" (HRI) materials by which we mean materials having an index of refraction which exceeds that of the transparent, typically embossed, base layer by a numerical value of preferably 0.5 or more. Since the refractive index of the base layer will typically fall in the range of 1.45 - 1.55, then a high refractive index material will be one with an index of preferably 2.0 or more. In practice high refractive index materials with good visual transparency will have an index in the range 2.0 to 2.5.

Most preferably, the reflection enhancing material is a dispersion of reflective particles in a binder, such as a metallic ink, because such materials are well suited to localised application, e.g. by printing, and can readily be applied in the form of any desired pattern or design.

In many preferred embodiments, the reflection enhancing material is applied across the whole of the region in which the curable transparent material is present. The reflection enhancing material could extend beyond the perimeter of the region but preferably shares the same perimeter. Thus, the optically active portion of the device is defined by the shape of the region and advantageously this may define indicia such as a character, letter, number, symbol, graphic element or the like. In other preferred the reflection enhancing material is applied to an area within the region, the area defining indicia such as a character, letter, number, symbol, graphic element or the like. If both the region of curable material and the area of reflective material define indicia, there may be two (or more) indicia apparent if the curable material is distinguishable from its surroundings (e.g. tinted). In such cases, preferably the indicia are different (e.g. each has different information content).

The layer of reflection enhancing material could also be made up of two or more reflection enhancing materials arranged in a pattern, e.g. two or more different coloured metals or two or more different metallic inks (or similar). For example, the layer could comprise a pattern made up of a first material comprising a binder containing a dispersion of copper particles and a second material comprising a binder containing a dispersion of aluminium particles. Alternatively the reflective particles may be the same in both materials but one or both may include an optically effective substance such as a colourant which renders the pattern visible to the human eye or to a machine. The substance may for example be detectable only under certain illumination conditions (e.g. UV).

In step (e) the partially cured transparent material and the layer of reflection enhancing material can be formed by any appropriate method but preferably the layers are embossed with a die carrying the relief structure, wherein the die advantageously forms part of an embossing roller. If multiple devices are to be formed on a web (later to be divided into individual security documents or articles each carrying one of the devices), the embossing roller may preferably carry the relief structure in the form of a repeating pattern. The repeat periodicity is preferably matched to that of the article or document repeat length and/or width.

In preferred embodiments, the substrate will ultimately form the substrate of a security document or security article and hence may carry additional features outside the region of the security device. Thus in a particularly preferred implementation, the method further comprises, at any point before, during or after steps (a) to (e):
(x) applying a coating to the substrate outside the region to which the curable transparent material will be or has been applied, the coating preferably comprising one or more opacifying layers.

This step is particularly relevant where the substrate is to become the substrate of a polymer banknote. The coating may be applied to one or both sides of the substrate and is preferably omitted across the region in which the security device is formed on both sides, although in some cases it may be applied across all of some of the region on the side of the substrate opposite from that to which the curable material is applied. This can lead to the appearance of a "half window" effect and/or conceal one or more portions of the device when viewed through the substrate. The opacifying layers could be polymeric coatings or could comprise paper sheet(s) laminated to the substrate to form a polymer/paper composite document.

Most preferably, step (x) is performed before step (a) and/or after step (e), such that the coating of the substrate does not interrupt the manufacture of the security device. The substrate will typically also be subject to one or more further coating or printing steps for applying graphics such as images and information, as well as other security elements e.g. fine line prints or guilloches, as would typically be associated with security documents such as banknotes and the like. This too may take place at any time during the process but most preferably before step (a) or after step (e).

In particularly preferred embodiments the method further comprises, before step (a):
(ai) treating the surface of the substrate to increase adhesion between the substrate and the curable transparent material, preferably by the application of a primer substance or corona treatment.

This can for example raise the surface of the substrate making it more receptive to the subsequent application of the curable material and/or the coating provided for in optional step (x).

The relief structure could be configured to exhibit any type of optically variable effect, which means that its appearance is different at different viewing angles. In particularly preferred embodiments, the optically variable effect generating relief structure is one which gives rise to a diffractive optical effect, such as a hologram or a diffraction grating. However, it should be appreciated that in other embodiments the relief structure may be a non-holographic optical structure, such as a prismatic structure.

As already mentioned, the method can preferably be implemented as a web-based process with multiple devices being formed on a substrate which is then divided such that each device is located on a separate piece of substrate. Hence, preferably the method further comprises, after step (e), cutting the substrate into individual security documents or security elements. Typically this would also take place after optional step (x) has been performed.

In particularly preferred embodiments, the substrate is a security document substrate, preferably a banknote substrate, most preferably a polymer banknote substrate or polymer/paper hybrid banknote substrate. In other preferred embodiments, the substrate is a security article substrate, preferably a substrate of a security thread, strip, patch, transfer strip, or label.

Most preferably, the substrate comprises a polymer, preferably polypropylene (PP), orientated polypropylene (OPP), biaxially orientated polypropylene (BOPP), polyethylene teraphthalate (PET), polyethylene, polyamide, polycarbonate, or polyethylene naphthalate (PEN)

Also disclosed is a security document, preferably a banknote such as a polymer banknote or polymer/paper composite banknote, integrally comprising a security device manufactured in accordance with the above-described method, wherein the transparent substrate provided in step (a) is the substrate of the document. By "integrally comprising" it is meant that the substrate provided in step (a) of the method is the substrate forming the document. However it should be noted that in step (b) the curable material need not be applied directly onto the substrate: one or more intervening layers (such as the optional primer mentioned above) may exist between the substrate and the curable material, provided these layers are also transparent.

Also disclosed, but not claimed, is a security device, comprising a transparent substrate, a cured transparent material on a region of the substrate, and a layer of reflection enhancing material on the transparent material, wherein the surface of the cured transparent material in contact with the layer of reflection enhancing material and both surfaces of the layer of reflection enhancing material are formed so as to follow the contours of an optically variable effect generating relief structure, and the reflection enhancing material comprises a dispersion of reflective particles in a binder.

As described above, since both sides of the reflection enhancing material conform faithfully to the contour of the surface relief, the replay of the optically variable effect is of substantially equal quality on both sides of the device. The use of a reflection enhancing material comprising a dispersion of reflective particles in a binder allows the reflective area to be laid down locally according to any desired design.

Preferably, the reflective particles dispersed in the binder comprise metallic particles, optically variable particles (e.g. thin-film interference layer structures), magnetic optically variable particles or the like. For instance, in particularly preferred examples, the reflection enhancing material is a metallic ink.

The metallic particles may be derived from metals such as aluminium, copper, zinc, nickel, chrome, gold, silver, platinum, or any other metals or associated alloys such as copper-aluminium, copper-zinc or nickel-chrome which may be deposited under vacuum. Organic colorants or dyes may be added to the binder to achieve the desired colour.

It is preferable, though not essential, that the metal particles be highly platelet or lamella in nature - that is the dimensions of the metal particles along the axis parallel to the reflective interface (the platelet length) is significantly greater than the dimensions transverse to the reflective interface (the platelet thickness). By "significantly greater" we mean the platelet length should be at least 2 to 5 times the thickness and desirably more. Platelet thickness depending on the basic method of production may range 10 nm to 100nm, but for application to holographic or diffractive structures the preferred thickness is in the range 10nm to 100nm and more especially 20 - 50 nm. It is desirable to ensure that the flake conforms to the shape of the optical microstructure relief with a good spatial fill factor and this can be achieved by choosing that platelet length and width, are such that both dimensions exceed the periodicities present in the optically variable diffractive micro-structure. Also the fact that the flakes lengths and widths are on average 40 times their thickness means that they are not mechanically stiff enough to be self-supporting under the influences of gravity and the compressive forces experienced by the dispersion as it dries or cures. Thus they will tend to conform readily to the shape of the grating reliefs as the inks dries. This improved conformance to the shape of the grating profiles together with the fact that typically each individual flake will without interruption tend to span one grating groove will provide much higher diffraction efficiency than for 100nm flakes. Further improvement in diffraction efficiency will be delivered by further increases in platelet length and width. Specifically if we regard each diffraction groove as a single secondary source of disturbance within a chain or series of coherent secondary sources (that is the grating array) then it is known from basic diffraction theory that full diffraction efficiency is not achieved until there is an uninterrupted array of 8-10 or more coherent secondary sources i.e. reflective grating grooves. Thus in an exemplary scenario the platelet flakes would have a length or width sufficient to span at least 8-10 grating grooves. Thus for a typical diffractive optically variable image device especially preferred platelet lengths and widths will be of the order 10,000nm or more.

The reflection enhancing ink may be curable by UV radiation in the same manner as the curable transparent material or the reflection enhancing ink may be physically drying and may be water or solvent based. For a physically drying ink the binder may comprise any one or more selected from the group comprising nitrocellulose, ethyl cellulose, cellulose acetate, cellulose acetate propionate (CAP), cellulose acetate butyrate (CAB), alcohol soluble propionate (ASP), vinyl chloride, vinyl acetate copolymers, vinyl acetate, vinyl, acrylic, polyurethane, polyamide, rosin ester, hydrocarbon, aldehyde, ketone, urethane, polythyleneterephthalate, terpene phenol, polyolefin, silicone, cellulose, polyamide and rosin ester resins.

The composition may additionally comprise a solvent. The solvent used in the metallic ink may comprise any one or more of an ester, such as n-propyl acetate, iso-propyl acetate, ethyl acetate, butyl acetate; an alcohol such as ethyl alcohol, industrial methylated spirits, isopropyl alcohol or normal propyl alcohol; a ketone, such as methyl ethyl ketone or acetone; an aromatic hydrocarbon, such as toluene; or water.

For a UV curable ink the binder may comprise an acrylic based UV curable clear embossable lacquer or coating. Such UV curable lacquers can be obtained from various manufacturers, including Kingfisher Ink Limited, product ultraviolet type UVF-203 or similar. Other suitable materials for the binder include UV curable polymers employing free radical or cationic UV polymerisation. Examples of free radical systems include photo-crosslinkable acrylate-methacrylate or aromatic vinyl oligomeric resins. Examples of cationic systems include cycloaliphatic epoxides. Hybrid polymer systems can also be employed combining both free radical and cationic UV polymerization.

The security device can further have any of the features resulting from the optional method steps presented above.

Also disclosed is a security document, preferably a polymer banknote, integrally comprising a security device as described above, the substrate of the security document forming the substrate of the device.

Examples of security devices, security documents and methods for their manufacture will now be described with reference to the accompanying drawings, in which:
Figure 1 is a schematic cross-section through a first embodiment of a security document equipped with an exemplary security device;
Figure 2 is a plan view of the security document of Figure 1;
Figure 3 is a flowchart depicting selected steps of a first embodiment of a method for manufacture of a security device;
Figures 4a, b, c and d depict components of a second embodiment of a security device at various stages of manufacture;
Figure 5 is a graph schematically illustrating the relationship between diffractive efficiency (D.E.) of an exemplary optically variable effect generating relief structure and the degree of curing (C) of a material at the time at which the relief structure is formed in the surface of the material;
Figure 6 schematically depicts an embodiment of apparatus suitable for manufacture of a security device;
Figure 7(i) schematically depicts selected steps of an exemplary manufacturing process for a security device with process time (P.T.) increasing from left to right of the Figure, Figures 7(a), (b) and (c) illustrating three exemplary alternative schemes for preforming the first and second curing steps and corresponding graphs showing the degree of curing (C) of a material as the manufacturing process proceeds;
Figure 8 is a schematic cross-section through a further embodiment of a security document exhibiting a further embodiment of a security device; and
Figure 9 is a plan view of the security document of Figure 8.

The present description will focus on security devices provided with optically variable effect generating relief structures which give rise to diffractive optical effects, such as holograms or diffraction gratings. However, it should be appreciated that in other embodiments the relief structure may be a non-holographic micro-optical structure, such as a prismatic structure. Examples of prismatic structures suitable for the security devices of the sort presently disclosed include, but are not limited to, a series of parallel linear prisms with planar facets arranged to form a grooved surface, a ruled array of tetrahedral, an array of square pyramids, an array of corner cube structures, and an array of hexagonal faced corner cubes. Another preferred type of micro-optical structure is one which functions as a micro lens, including those that refract light at a suitably curved surface of a homogeneous material such as plano-convex lenslets, double-convex lenslets, plano-concave lenslets and double-concave lenslets. Other suitable micro-optical structures include geometric shapes based on domes, hemispheres, hexagons, squares, cones, stepped-structures, cubes or combinations thereof.

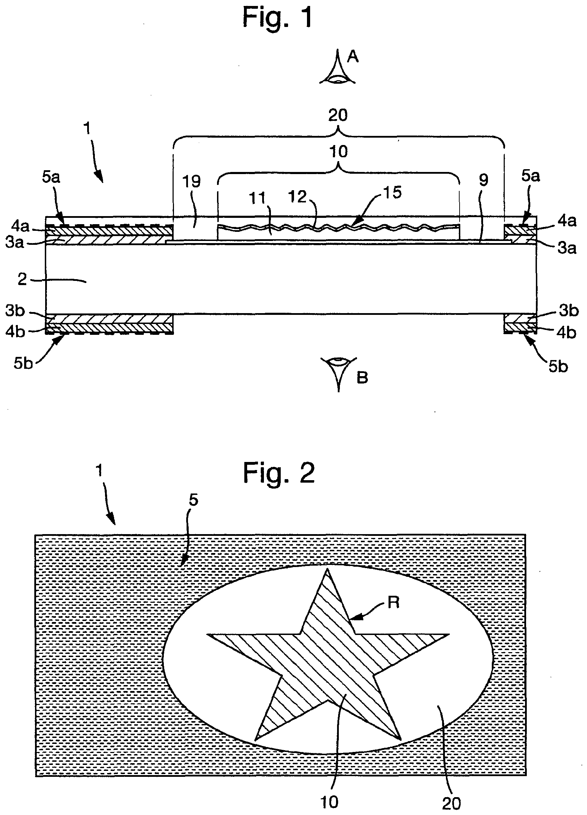

Figure 1 depicts a first embodiment of a security document 1, such as a banknote, cheque, visa, passport, identification card etc., which is provided with a security device 10. In this case, the security document 1 is formed based on a transparent substrate 2, such as a polymer film, which also forms a substrate of the security device 10. The security device 10 is considered to be integrally formed with the security document 1. It should be noted that in other cases the security device 10 may be formed on a separate substrate (not shown), which is then affixed to a security document using adhesive, or otherwise incorporated within a security document during manufacture.

In the case of Figure 1, the substrate 2 is typically formed of a visually transparent polymer such as polypropylene, although other flexible polymeric films suitable include polyethylene terephthalate PET), polyethylene, polyamide, polycarbonate, polyvinylchloride (PVC), polyvinylidenechloride (PVdC), polymethyl methacrylate (PMMA), or polyethylene naphthalate (PEN).

As is conventional in polymer banknotes and the like, the substrate 2 carries one or more coating layers on one or both of its surfaces which increases the document's opacity in the covered regions and/or provides a background to printed graphics. In the present example, the substrate 2 is coated with opacifying layers 3a, 3b, 4a and 4b on either side, which layers carry printed graphics 5a and 5b. In the present embodiment, the layers 3 and 4 are provided on both sides of the security document 1, but in other cases the layers may be provided on only one side or the other. Further, here the coatings 3 and 4 are omitted on both sides of the documents in a window region 20 within which the security device 10 is located. In other cases, the layers 3, 4 (and 5) may be omitted in the window 20 only on one side of the document, with one or more of the layers 3, 4 and 5 continuing over all or part of the window 20 on the other side of the document. This can be used to create a so-called "half window" effect. The coating layers 3, 4 could be replaced by paper layers to form a polymer/paper composite document.

Inside the window 20, on the surface of substrate 2 (here the upper surface, facing observer A) the security device 10 is disposed. A curable transparent material 11 is disposed on the substrate 2 across a region R. The radiation curable material preferably comprises a resin which may typically be one of two types: a) Free radical cure resins which are unsaturated resins or monomers, prepolymers, oligomers etc. containing vinyl or acrylate unsaturation for example and which cross-link through use of a photo initiator activated by the radiation source employed e.g. UV; or b) Cationic cure resins in which ring opening (e.g. epoxy types) is effected using photo initiators or catalysts which generate ionic entities under the radiation source employed, e.g. UV. The ring opening is followed by intermolecular cross-linking. The radiation used to effect curing will typically be UV radiation but could comprise electron beam, visible, or even infra-red or higher wavelength radiation, depending upon the material, its absorbance and the process used.

The curable transparent material 11 carries a reflection enhancing material 12, such as a dispersion of reflective particles in a binder (e.g. a metallic ink). The curable transparent material 11 and layer of reflection enhancing material 12 have been formed so as to follow the contours of a surface relief 15 defining an optically variable effect generating structure, such as a hologram or diffraction grating (as discussed further above). Importantly, both sides of the reflection enhancing material 12 (i.e. its interface with curable transparent material 11 and the opposite surface of the reflection enhancing material 12) both conform faithfully to the contours of relief structure 15. In this way, the optically variable effect generated by each side of the device is of substantially equal quality (e.g. brightness and sharp definition). One method by which this can be achieved will be described in more detail below.

In this example, the security document is completed by the application of a protective varnish or lacquer 19 (also transparent) which covers the security device and, here, also a portion of the surrounding window region 20 and optionally coatings 3, 4 and 5. In some cases the whole surface of the security document 1 may be covered with the protective coating 19.

It will also be noted that, in this example, the transparent curable material 11 is not applied directly to the transparent substrate 2, but rather a primer layer 9 exists between the substrate 2 and the curable transparent material 11. The primer layer 9 improves adhesion between the substrate 2 and the transparent curable material 11. However its use is optional. In further alternative embodiments, the substrate 2 may be corona treated in order to improve adhesion between it and curable material 11.

Figure 2 shows a plan view of the security document of Figure 1 as viewed by observer A. As previously described, the document 1 carries graphic layer 5 across much of its surface which (together with underlying coating layers 3 and 4) is omitted in the region of window 20. Inside window 20, the security device 10 extends across the region R which here has the form of a star-shaped symbol. In other cases, the region R may define an alternative indicia such as a letter, number or graphic, and the region R could extend to cover the whole window 20 (although this is less preferred). The optically variable effect generated by relief structure 15 is visible across the whole of star-shaped region R (assuming the relief structure 15 itself extends across the whole of the region). Outside the region R, the window 20 is transparent and optically invariable. It should be noted that when the security document is viewed from the opposite side of the substrate (i.e. from the position of observer B depicted in Figure 1) its appearance will be substantially identical as that shown in Figure 2 since here the same surface relief 15 in reflective layer 12 will be viewed through transparent curable material 11.

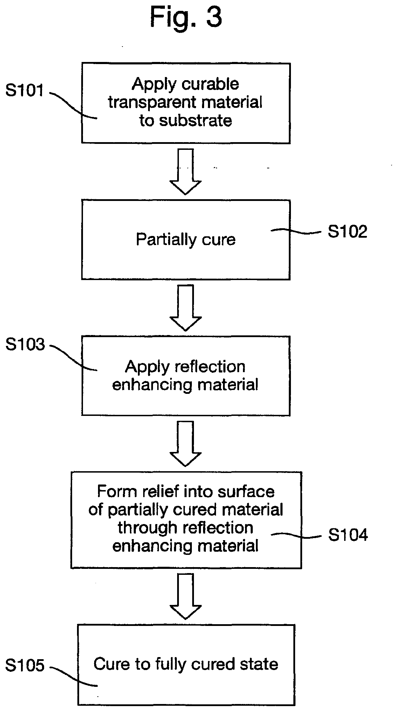

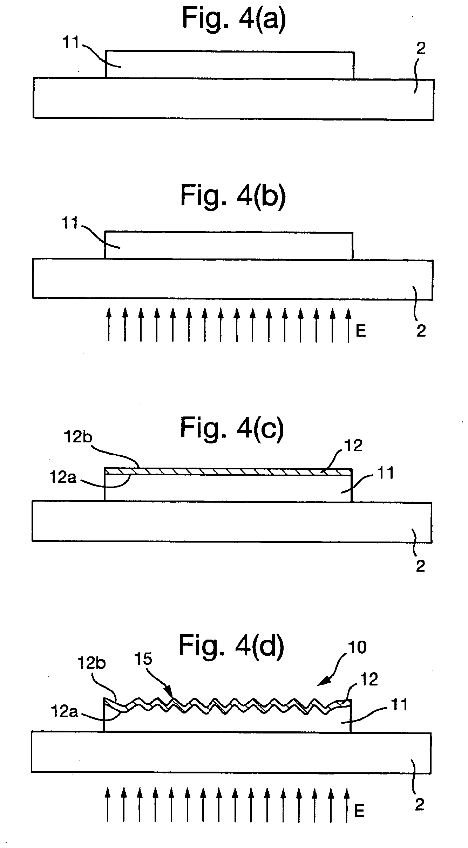

Figure 3 depicts steps in a first embodiment of a method suitable for forming a security device of the sort described with respect to Figures 1 and 2. To illustrate exemplary implementations of the steps, Figures 4(a) to (d) show another embodiment of a security device at various stages during its manufacture.

In step S101, a curable transparent material 11 is applied to substrate 2, e.g. using any appropriate coating or printing technique such as precision bead coating, direct and indirect gravure coating, flexographic printing, meyer bar coating or slot coating. The resulting structure is shown in Figure 4(a). As described previously, in practice the substrate 2 may be treated prior to application of the curable transparent material 11, either by applying a primer layer 9 or by corona treatment to raise the surface of the substrate material, for example. The curable transparent material is applied across a region R which may define indicia.

In step S102, the curable transparent material 11 is partially cured by exposing the material to energy E, as shown in Figure 4(b). For example, the curable transparent material 11 may be a radiation curable material, e.g. a UV-curable material, in which case the curing energy E to which it is exposed may be radiation of one or more corresponding wavelengths known to achieve curing, e.g. UV wavelengths. As will be described in more detail below, the curing energy E is applied at a controlled dosage so as to achieve partial curing of the curable transparent material 11. That is, the curing level (or "degree of curing") of the material 11 is increased relative to the state of the material 11 in which it was applied to the substrate in step S101, but stopping short of fully curing the material 11. The material 11 is considered to be "fully cured" when it retains no thermoplastic properties (i.e. it cannot be formed under the application of heat and/or pressure).

In step S103, a layer of reflection enhancing material 12 is applied to the transparent material 11 and, in this example, covers the whole region R in which the curable transparent material 11 has been applied. The resulting structure is shown in Figure 4(c). The two opposing surfaces of the reflection enhancing material are identified as 12(a) and 12(b). The reflection enhancing material is preferably a binder containing a dispersion of reflective particles, preferably a metallic ink and most preferably a platelet metallic ink, but in other cases could comprise a vapour deposited metal layer or a vapour deposited high refracted index (HRI) material.

In step S104, a relief structure 15 defining an optically variable effect generating structure such as a hologram or diffraction grating is formed into the surface of the partially cured transparent material 11 through the layer of reflection enhancing material 12, e.g. by impressing the relief structure into the layers using an embossing roller. By forming the relief structure 15 in this way, both surfaces 12a and 12b (and the interfacing surface of curable material 11) follow the impressed relief structure 15, as shown in Figure 4(d).

In step S105, also shown in Figure 4(d), the partially cured material 11 is again exposed to curing energy E so as to complete curing such that the material 11 reaches its fully cured state and the relief structure 15 becomes fixed.

The security device 10 is thus complete and any further steps are optional. If any coating layers are also to be provided on substrate 2 (such as layers 3, 4 and 5 described with reference to Figure 1), such coatings may be applied to the substrate 2 outside the region R in which the device 10 is to be formed at any stage before, during or after the described method. However, it is preferred that such coatings are applied either before step S101 or after step S105 (or both) so as not to interrupt the security device manufacturing process. One of the particular advantages of the presently disclosed method is that all of the steps can be carried out using printing or other coating techniques and, as such, all steps (including the application of coatings 3, 4, 5 and formation of the security device 10) can be carried out in one inline manufacturing process if desired. This is particularly the case where a dispersion of reflective particulars in a binder (such as a metallic ink) is used as the reflection enhancing material 12, rather than a vapour deposited metal or HRI layer.

The partial curing step S102 will now be described in more detail. As already explained, in the partial curing step, the curable transparent material 11 is exposed to curing energy appropriate for the material in question. If the material 11 is a heat curable material, the applied curing energy E may be heat. However, radiation curable materials are preferred since the application of radiation (such as light of one or more particular wavelengths) can more readily be controlled than the application of heat. In a particularly preferred example, the curable transparent material 11 is a UV-curable transparent material and thus the curing energy E is UV radiation. The material 11 may be exposed to the curing energy by irradiation of the material by an appropriate radiation source as will be described further below.

The curable material 11 is considered "partially cured" when its curing level is increased relative to that possessed by the material when applied to the substrate in step S101, but the material 11 is not yet "fully cured". The material 11 is considered "fully cured" when the material possesses no thermoplastic properties and cannot be formed under the application of heat and/or pressure. Thus the partially cured material 11 can typically be characterised as either a very high viscosity, high molecular weight liquid (i.e. higher viscosity and/or higher molecular weight than the viscosity or molecular weight of the material in the state applied to the substrate in step S101), or as a soft formable solid (i.e. soft relative to its fully cured state after curing in step S105).

The degree of curing possessed by the material at the point at which the relief structure 15 is formed (step S104) is controlled through selection of the dose of curing energy E applied to the material 11 during the partial curing step S102. The energy dosage is dependent on the intensity of the energy to which the material is exposed as well as the duration of the exposure, and hence the energy dosage applied during step S102 can be adjusted by adjusting the intensity of the applied energy (e.g. the power output of a radiation source) and/or the time for which the material is exposed to the energy. Typically, the degree of curing of the material will increase proportionately in accordance with the dosage of curing energy applied. Thus, once the energy dosage required to achieve full curing of the material is known (which may for example be determined empirically), the respective energy dosages required to achieve different levels of partial curing can also be calculated. For example, if it is desired to achieve a curing level of 50%, an energy dosage half that required to achieve full curing may be applied.

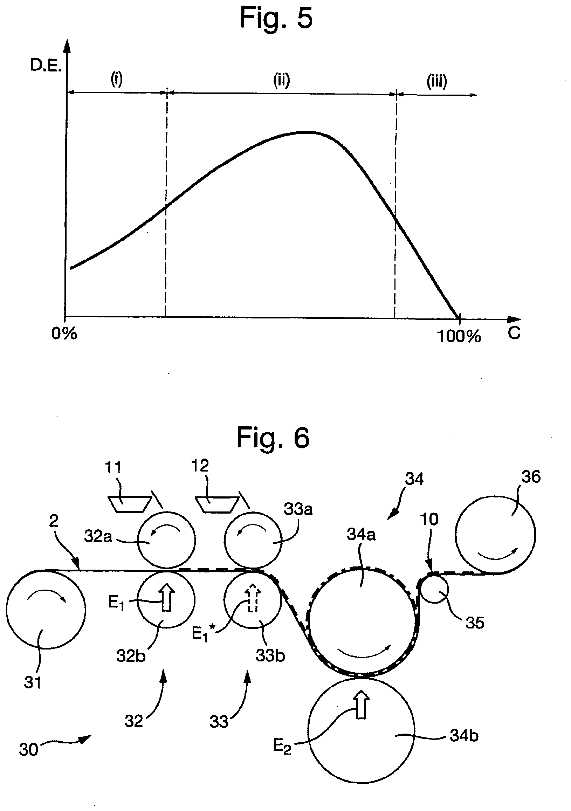

The degree of curing of the material 11 at the point at which the relief structure 15 is formed in the material (step S104) will have an impact on the optical effect generated by the finished security device 10, and this relationship is illustrated in Figure 5 which schematically depicts the diffractive efficiency (DE, in arbitrary units) of the finished security device 10, against curing level C of the material 11 at the point at which the relief structure 15 is formed. It will be seen that the diffractive efficiency of the finished device initially increases with curing level, reaches a peak, and then decreases as the curing level approaches 100%. This is because when the curing level is very low (region (i)), the material 11 is soft and will be subject to significant amplitude relaxation effects (i.e. "viscous creep") following the initial forming of the relief and, since first order diffraction efficiency is proportional to the square of the grating amplitude, there will be an attendant loss of diffraction efficiency or brightness. Furthermore, the resin may still be tacky to a degree, meaning that portions of the material may be stripped off during forming, resulting in poor replication of the relief structure 15. It should be noted that even at 0% curing, the diffractive efficiency is typically not zero since the curable material 11 will typically have some thermoplastic properties even before curing commences and may thus be able to retain the relief to an extent.

At very high curing levels (region (iii)) the material 11 is near solid when the relief structure 15 is to be impressed into its surface and thus will typically not conform fully to the relief. In particular, when the curing level reaches 100%, the diffractive efficiency of the device will be zero, since in this state the material 11 will not accept a relief structure 15.

It is therefore preferred that in the partial curing step S102, the transparent curable material 11 is cured to a degree located in region (ii) of Figure 5, at which the material is sufficiently cured so as to retain the impressed relief structure 15 for a relatively long period whilst still being sufficiently formable so as to accept the relief and conform to its contours. The degree of curing required will depend on the material in question, but typically it is preferred that the material is cured in partial curing step S102 to between 10 and 70% cured, more preferably between 30 and 50% cured, where 0% represents the state in which the material was applied to the substrate in step S101, and 100% corresponds to full curing. Thus, in step S102, the curable transparent material 11 is preferably exposed to between 10 and 70% of the total curing energy dose required to fully cure the curable transparent material 11, more preferably between 30 and 50% of that dose.

It should be noted that the degree of curing achieved during partial curing step S102 can either be monitored through control of the curing parameters as mentioned above or by assessing the diffractive efficiency of the completed security device and comparing it against the desired diffractive efficiency (likely to correspond to the peak diffractive efficiency as shown in Figure 5), and adjusting the curing parameters for the next device being manufactured as appropriate. As the skilled man will appreciate, "diffractive efficiency" means the ratio of the intensity of the first order diffracted light relative to the intensity of the incident light beam. The maximum diffractive efficiency typically achievable is generally within the range of 20 to 25%. Preferably, the degree of curing of the material 11 at the point at which the relief is formed is selected so as to achieve a diffractive efficiency of at least 50% of the maximum achievable diffractive efficiency, i.e. preferably at least 10%, more preferably at least 12.5% diffractive efficiency.

An example of apparatus suitable for manufacturing a security device of the sort described above will now been described with reference to Figure 6. It should be noted that the exemplary apparatus depicted in Figure 6 is suitable for implementing method as a continuous, web-based technique but in other (less preferred) examples the devices could be formed using batch processing methods.

The substrate 2, such as a transparent polymer film, is supplied from a reel 31. As previously discussed, at this stage the substrate may already carry one or more coating layers, such as layers 3 and 4 shown in Figure 1, which define window or half window regions therein. Alternatively, the substrate 2 may be as yet uncoated. At a first station 32, a curable transparent material 11 is applied to the substrate preferably over discrete regions R (although in other cases the region R may effectively cover the whole substrate 2). In this example the curable transparent material is a radiation curable transparent material and station 32 includes a first radiation source E₁ which exposes the applied material to a radiation dosage selected to achieve partial curing. As mentioned above, the radiation dosage is determined based on the intensity of the radiation (e.g. the wattage of the radiation source E₁) and the duration for which the material 11 is exposed as the web passes through station 32.

At a second station 33, comprising for example a print roller 33a and opposing roller 33b, a reflection enhancing material 12, here a metallic ink, is applied directly on to the partially cured transparent material 11. If desired, station 33 may also comprise a curing radiation source E₁* to continue the partial curing of the transparent curable material 11. In other cases, the curing radiation source E₁ in first station 32 may be omitted and partial curing take place entirely at station 33. In still further examples, the curing radiation source may be provided separately from stations 32 or 33, for example, in-between stations 32 and 33 or subsequent to station 33. In each case it is preferred that the radiation is directed to the curable material 11 through the transparent substrate 2, since once the web reaches station 33, the application of reflective material 12 will obstruct the passage of radiation from the opposite side.

The web then passes to a third station 34 where the relief structure 15 is formed. Here, the station 34 comprises a rotary embossing roller 34a containing a repeating pattern of the desired relief structure 15 and an opposing roller 34b such as a transparent quartz nip roller. The relief 15 is impressed into the partially cured material 11 and reflection enhancing layer 12 in the manner previously described such that both surfaces of the reflection enhancing material 12 conform faithfully to the relief. A curing radiation source E₂ is disposed in opposing roller 34b so as to expose the curable material to curing radiation such that the material becomes fully cured and the relief structure 15 becomes fixed. In this example, the second curing step performed by source E₂ takes place at the point of impression of the relief structure 15 into the device. However, in other examples, radiation source E₂ may be located just after the web leaves the impressing nip between rollers 34a and 34b. In both cases it is preferred that the curing radiation is directed to the material through the transparent substrate 2.

The web, now carrying a series of devices 10, is then passed about an idler roller 35 and onto a reel 36. Subsequent process steps (not shown in Figure 6) may include the coating of layers such as layers 3 and 4 as depicted in Figure 1, the printing of graphic layers on one or both sides such as layer 5 depicted in Figure 1, and/or cutting of the web into individual security documents (such as banknotes) or security articles (such as security threads, patches, labels, foils etc.), each carrying one security device 10. In order that the device 10 is identical on each such security article or security document, it is preferred that the repeating relief structure on embossing roller 34a has a periodicity matched to that of the document or article repeat length (and/or width if multiple documents are to be produced laterally across the web).

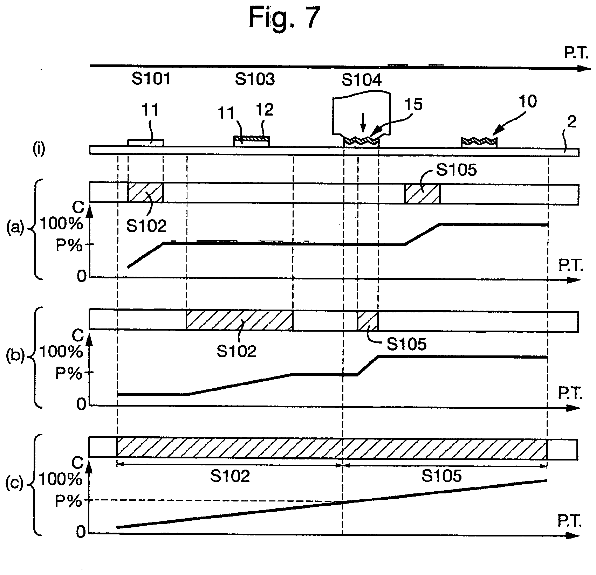

It will be appreciated from the discussion of Figure 6 above that in practice the two curing steps S102 and S105 can be performed at a number of different stages of manufacture of the security device. Indeed, whilst in some preferred embodiments the device will be formed in a series of discrete process steps in the order presented in Figure 3, in other cases the steps may take place in a different order and/or one or both of the two curing steps as S102 and S105 may occur simultaneously with, or overlap with, certain of the other steps of the preferred method. This will now be described further with respect to Figure 7.

Figure 7(i) schematically illustrates components of an embodiment of a security device 10 of various stages of its manufacture. Arrow P.T. indicates the process time. At the beginning of the process in step S101, as previously described the curable material 11 is applied to the substrate 2. In step S103, the reflection enhancing material is applied to the curable material 11 and in step S104 the relief structure 15 is formed into both materials, resulting finally into security device 10. Figures 7(a), (b) and (c) provide three different examples of when each of the curing steps S102 and S105 may be performed relative to steps S101, S103 and S104 depicted in Figure 7(i). In each case, the curing steps are depicted by shaded regions of the bar at the top of the Figure, and underneath is shown a corresponding plot of the curing level C of the material 11 as the manufacturing method progresses.

In Figure 7(a), the first curing step S102 in which the material 11 is partially cured is performed substantially simultaneously with the application of the curable material 11 to the substrate 2 in step S101. Thus, during step S101, the material 11 is exposed to a dosage of curing energy E sufficient to increase the curing level of the material from that in which the material is applied to the substrate (taken to correspond to 0% curing in the Figures) to a partially cured level, denoted as P%, which preferably lies within the range 10 to 70%, more preferably 30 to 50%. In Figure 7(a), no further curing is carried out until after formation of the surface relief 15 in step S104 and hence the curing level is at P% at the point at which impression of the relief 15 takes place. After formation of the relief 15, the second curing step S105 is performed (e.g. by exposing the material to curing radiation just after the material leaves the impressing nip as mentioned above) and during this stage the curing level of material 11 is raised from P% to 100%, i.e. fully cured. It should be appreciated that the precise dosage of curing energy delivered in step S105 is not crucial, provided that it is sufficient to raise the curing level to 100%. Generally, it will not be detrimental to over-cure the material and hence the duration of step S105 may extend beyond the point at which 100% curing is actually achieved.

In an alternative embodiment depicted in Figure 7b, the first, partial curing step S102 commences after the curable material 11 has been applied to the substrate 2 (i.e. after step S101) and continues during the application of reflection enhancing layer 12 and beyond. This could be achieved for example by the provision of curing means before station 33 and after station 33, in addition to radiation source E₁* as depicted in Figure 6. During step S102, the curing level of the material 11 is again raised to P% and remains at this level when step S104 (formation of relief 15) commences. During step S104 the second curing step S105 takes place, using for example the arrangement E₂ shown in Figure 6. The material is thus fully cured when it exits the impression nip.

It should be noted that either or each of the curing steps S102 and S105 could in practice comprise multiple discrete curing steps. For example, the curing steps shown in Figures 7(a) and 7(b) could be combined such that partial curing to curing level P% is achieved cumulatively, with the material 11 being exposed to radiation during its application in step S101 as well as subsequently and/or the second curing step S105 taking place both simultaneously during impression of the relief 15 as well as subsequently. Further it should be noted that either curing step may overlap with only a portion of one or more of the steps S101, S103 and S104.

It will be appreciated from the discussion of Figures 7(a) and 7(b) that what is important is that the material 11 is partially cured by the point at which the relief structure is impressed in step S104. It is also preferred, although not essential, that the material 11 is partially cured by the point at which the reflective material 12 is applied in step S103, in order that the curable material 11 will better withstand the application of a further layer. However, the level of partial curing at the point at which the reflection enhancing material 12 is applied in step S103 may be lower than the partial curing level at the point at which the relief structure is formed in step S104. It should be noted that these principles do not require any interval between the first and second curing steps S102 and S105, and an example of such an embodiment is depicted in Figure 7(c).

Here, the curable material 11 is exposed to curing energy substantially continuously throughout steps S101, S103 and S104. For simplicity, it is assumed that the intensity of the applied curing energy is substantially constant throughout the process, such that the curing level of the material 11 increases substantially linearly with time as shown in Figure 7(c), although this is likely to be difficult in practice. Once the material 11 has been applied to the substrate 2, its curing level C is thus steadily increased from 0%, with the applied dosage designed such that at the point at which the relief structure 15 is formed, the material 11 has reached partial curing level P%. With the relief impressed, the curing continues, bringing the curing level up to 100% by the end of the process. In this case the first curing step S102 is defined as ending at the point at which step S104 begins, and the second curing step S105 commences at the same instant. In preferred embodiments however, the two curing steps S102 and S105 are discrete and will be divided by an interval during which sustainably no curing energy is applied (or at least a lower intensity of curing energy is applied).

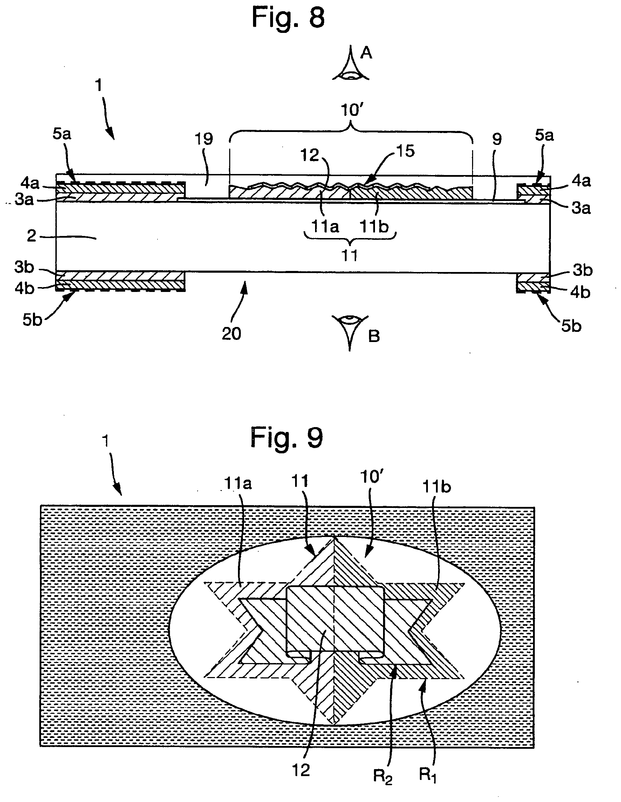

A further embodiment of a security document 1 comprising an integral security device 10' will now be described with reference to Figures 8 and 9. Here, the construction of security document 1, including substrate 2, coating layers 3 and 4 and print 5 is the same as discussed with respect to Figures 1 and 2 and like features are identified using the same reference numbers. The security device 10' is formed using the same technique as described above such that a reflection enhancing material 12 is disposed on a cured transparent material 11 and follows a surface relief defining an optically variable effect generating structure 15, with both surfaces of the reflection enhancing material 12 conforming faithfully to its contours.

In this example, the reflection enhancing material 12 does not cover the whole region in which the cured transparent material 11 is present but rather, as shown best in the plan view seen by observer A shown in Figure 9, here the cured transparent material 11 covers a region R₁ having the form of a six-pointed star shaped symbol whilst the reflection enhancing material 12 is provided only across an area R₂ within region R₁, having the shape of a ribbon symbol. Thus, the region R₁ and area R₂ preferably define different indicia. If the cured material 11 is clear and colourless, the star shaped region R₁ will not be visible to the observer. However, in this embodiment the cured material 11 comprises an optically effective substance such as a colorant, making it visible to observer A and observer B. the colorant will also have the effect of causing the device to have different appearances from the point of view of observer A and observer B, since observer A will see the optical effect through colourless protective lacquer 19, meaning that the colour of the effect will be determined solely by that of reflection enhancing material 12, whereas observer B will see the optically variable effect through the cured material 11 which will therefore superimpose its colour onto the optically variable effect.

The optically effective substance in the cured material 11 could comprise any visible colorant and/or a non-visible but machine detectable substance and/or a substance which only becomes visible under certain conditions such as UV illumination. For example, the optically effective substance could be a luminescent, fluorescent or phosphorescent material.

The reflection enhancing material 12 and/or substrate 2 may also comprise an optically effective substance such as these.

The security level of the device can be further increased by forming the layer 11 from two or more transparent curable materials and this is the case in the embodiment depicted in Figures 8 and 9, where one portion of region R₁ is formed of a first transparent curable material 11a and another portion of the region is formed with a second curable transparent material 11b. The two or more curable materials preferably comprise different optically effective substances so that a pattern formed by the two curable materials is visible to a human observer and/or to a machine. It is preferred that where two or more materials are provided in this way, they are each responsive to the same form of curing energy and will cure at the same rate as one another so that the entire layer 11 has reached the same partial curing level P% by the end of partial curing step S102.

As noted above, in all embodiments it is preferred that the reflection enhancing material 12 comprises a dispersion of reflective particles in a binder, such as a metallic ink, since this enables the layer to be laid down using printing or coating techniques, and therefore allows the method to be implemented as an inline process. Preferably, the reflective particles are metallic platelets such as flakes of aluminium or copper or an alloy thereof. Examples of suitable reflection enhancing materials are given above. In other cases, the reflective particles could be HRI pigments or thin film interference layer stacks (magnetic or otherwise) which give rise to a colour shift appearance. However, the use of such dispersions and printing or coating techniques is not essential and the reflection enhancing layer 12 could instead be formed by the vapour deposition of metal or an HRI material (i.e. a material having a refractive index sufficiently different from that of the curable material 11 and protective lacquer 19), such as zinc sulphide, titanium dioxide or zirconium dioxide.

## Claims

1. A method of manufacturing a security device (10), comprising:
(a) providing a transparent substrate (2);
(b) applying a curable transparent material (11) to a region of the substrate;
(c) in a first curing step, partially curing the curable transparent material by exposure to curing energy;
(d) applying a layer of a reflection enhancing material (12) to the curable transparent material;
(e) forming the partially cured transparent material and the layer of reflection enhancing material such that both surfaces of the layer of reflection enhancing material follow the contours of an optically variable effect generating relief structure (15);
(f) in a second curing step, fully curing the formed transparent material by exposure to curing energy such that the relief structure is retained by the formed transparent material.

2. A method according to claim 1, wherein step (c) comprises exposing the curable transparent material to between 10 and 70% of the total curing energy dose required to fully cure the curable transparent material, preferably between 30 and 50%.

3. A method according to any of the preceding claims, wherein the curable transparent material further comprises an optically effective substance, preferably a visible colourant, or a luminescent, phosphorescent or fluorescent material, and wherein preferably step (b) comprises applying two or more curable transparent materials to the region of the substrate in a pattern, one or more of the curable transparent materials comprising an optically effective substance such that the two or more curable transparent materials have different optical characteristics, preferably visibly different under at least visible or non-visible illumination.

4. A method according to any of the preceding claims, wherein the reflection enhancing material comprises one or more of:
a dispersion of reflective particles in a binder, preferably a metallic ink;
a metal or alloy, preferably vapour-deposited; or
a material having a refractive index which differs from that of the curable transparent material by at least 0.3, preferably zirconium dioxide or zinc sulphide.

5. A method according to any of the preceding claims, wherein either the reflection enhancing material is applied across the whole of the region in which the curable transparent material is present, or the reflection enhancing material is applied to an area within the region, the area defining indicia such as a character, letter, number, symbol, graphic element or the like.

6. A method according to any of the preceding claims, wherein the region in which the curable transparent material is applied defines indicia such as a character, letter, number, symbol, graphic element or the like.

7. A method according to any of the preceding claims, wherein steps (d) and (e) are performed simultaneously, at least in part.

8. A method according to any of the preceding claims, further comprising, at any point before, during or after steps (a) to (e):
(x) applying a coating to the substrate outside the region to which the curable transparent material will be or has been applied, the coating preferably comprising one or more opacifying layers.

9. A method according to any of the preceding claims, wherein the substrate is either a security document substrate, preferably a banknote substrate, most preferably a polymer banknote substrate, or the substrate is a security article substrate, preferably a substrate of a security thread, strip, patch, transfer strip, or label.

## Patentansprüche

1. Verfahren zum Herstellen einer Sicherheitsvorrichtung (10), Folgendes umfassend:
(a) Bereitstellen eines transparenten Substrats (2);
(b) Auftragen eines härtbaren transparenten Materials (11) auf eine Region des Substrats;
(c) in einem ersten Aushärtungsschritt, teilweises Aushärten des härtbaren transparenten Materials durch Aussetzen einer Aushärtungsenergie;
(d) Auftragen einer Schicht aus reflexionsverstärkendem Material (12) auf das härtbare transparente Material;
(e) Ausbilden des teilweise ausgehärteten transparenten Materials und der Schicht aus reflexionsverstärkendem Material, sodass beide Oberflächen der Schicht aus reflexionsverstärkendem Material den Konturen einer eine optisch variable Wirkung erzeugenden Reliefstruktur (15) folgen;
(f) in einem zweiten Aushärtungsschritt, vollständiges Aushärten des ausgebildeten transparenten Materials durch Aussetzen einer Aushärtungsenergie derart, dass die Reliefstruktur von dem ausgebildeten transparenten Material beibehalten wird.

2. Verfahren nach Anspruch 1, wobei Schritt (c) das Aussetzen des härtbaren transparenten Materials zwischen 10 und 70 % der gesamten Aushärtungsenergiedosis, die zum Aushärten des härtbaren transparenten Materials erforderlich ist, vorzugsweise zwischen 30 und 50 %, umfasst.

3. Verfahren nach einem der vorhergehenden Ansprüche, wobei das härtbare transparente Material ferner eine optisch wirksame Substanz, vorzugsweise einen sichtbaren Farbstoff, oder ein lumineszierendes, phosphoreszierendes oder fluoreszierendes Material umfasst und wobei vorzugsweise Schritt (b) das Auftragen von zwei oder mehr härtbaren transparenten Materialien auf die Region des Substrats in einem Muster umfasst, wobei ein oder mehrere der härtbaren transparenten Materialien eine optisch wirksame Substanz umfassen, sodass die zwei oder mehr härtbaren transparenten Materialien verschiedene optische Eigenschaften aufweisen, die vorzugsweise bei sichtbarer oder unsichtbarer Beleuchtung sichtbar verschieden sind.

4. Verfahren nach einem der vorhergehenden Ansprüche, wobei das reflexionsverstärkende Material eines oder mehrere der Folgenden umfasst:
eine Dispersion von reflektierenden Partikeln in einem Bindemittel, vorzugsweise eine metallische Tinte;
ein Metall oder eine Legierung, vorzugsweise aufgedampft; oder
ein Material mit einem Brechungsindex, der sich von dem des härtbaren transparenten Materials um wenigstens 0,3 unterscheidet, vorzugsweise Zirconiumdioxid oder Zinksulfid.

5. Verfahren nach einem der vorhergehenden Ansprüche, wobei das reflexionsverstärkende Material über die gesamte Region, in der das härtbare transparente Material vorliegt, aufgetragen wird oder das reflexionsverstärkende Material auf einen Bereich in der Region aufgetragen wird, wobei der Bereich Markierungen, wie etwa ein Zeichen, einen Buchstaben, eine Zahl, ein Symbol, ein graphisches Element oder Ähnliches, definiert.

6. Verfahren nach einem der vorhergehenden Ansprüche, wobei die Region, in der das härtbare transparente Material aufgetragen wird, Markierungen, wie etwa ein Zeichen, einen Buchstaben, eine Zahl, ein Symbol, ein graphisches Element oder Ähnliches, definiert.

7. Verfahren nach einem der vorhergehenden Ansprüche, wobei Schritte (d) und (e) wenigstens teilweise gleichzeitig durchgeführt werden.

8. Verfahren nach einem der vorhergehenden Ansprüche, ferner umfassend zu einem Zeitpunkt vor, während oder nach Schritten (a) bis (e):
(x) Auftragen einer Beschichtung auf das Substrat außerhalb der Region, auf die das härtbare transparente Material aufgetragen werden wird oder aufgetragen worden ist, wobei die Beschichtung vorzugsweise eine oder mehrere Trübungsschichten umfasst.

9. Verfahren nach einem der vorhergehenden Ansprüche, wobei das Substrat entweder ein Sicherheitsdokumentsubstrat, vorzugsweise ein Banknotensubstrat, am stärksten bevorzugt ein Polymerbanknotensubstrat ist oder das Substrat ein Sicherheitsartikelsubstrat, vorzugsweise ein Substrat eines Sicherheitsfadens, eines Streifens, eines Felds, eines Transferstreifens oder eines Etiketts ist.

## Revendications

1. Procédé de fabrication d'un dispositif de sécurité (10), comprenant :
(a) la fourniture d'un substrat transparent (2)
(b) l'application d'un matériau transparent durcissable (11) à une région du substrat ;
(c) dans une première étape de durcissement, le durcissement partiel du matériau transparent durcissable par exposition à une énergie de durcissement ;
(d) l'application d'une couche d'un matériau renforçant la réflexion (12) au matériau transparent durcissable
(e) la formation du matériau transparent partiellement durci et de la couche de matériau renforçant la réflexion de telle sorte que les deux surfaces de la couche de matériau renforçant la réflexion suivent les contours d'une structure de relief générant un effet optiquement variable (15),
(f) dans une seconde étape de durcissement, le durcissement complet du matériau transparent formé par exposition à une énergie de durcissement pour que la structure de relief soit retenue par le matériau transparent formé.

2. Procédé selon la revendication 1, dans lequel l'étape (c) comprend l'exposition du matériau transparent durcissable à entre 10 et 70 % de la dose d'énergie de durcissement totale requise pour durcir complètement le matériau transparent durcissable, de préférence entre 30 et 50 %.

3. Procédé selon l'une quelconque des revendications précédentes, dans lequel le matériau transparent durcissable comprend en outre une substance optiquement efficace, de préférence un colorant visible, ou un matériau luminescent, phosphorescent ou fluorescent,
et dans lequel de préférence l'étape (b) comprend l'application de deux matériaux transparents durcissables ou plus à la région du substrat selon un motif, un ou plusieurs des matériaux transparents durcissables comprenant une substance optiquement efficace de telle sorte que deux matériaux transparents durcissables ou plus aient des caractéristiques optiques différentes, de préférence visiblement différentes sous au moins une illumination visible ou non visible.

4. Procédé selon l'une quelconque des revendications précédentes, dans lequel le matériau renforçant la réflexion comprend un ou plusieurs parmi :
une dispersion de particules réfléchissantes dans un liant, de préférence une encre métallique ;
un métal ou alliage, de préférence déposé en phase vapeur ; ou
un matériau ayant un indice de réfraction qui diffère de celui du matériau transparent durcissable d'au moins 0,3, de préférence le dioxyde de zirconium ou le sulfure de zinc.

5. Procédé selon l'une quelconque des revendications précédentes, dans lequel soit le matériau renforçant la réflexion est appliqué sur l'intégralité de la région dans laquelle le matériau transparent durcissable est présent, soit le matériau renforçant la réflexion est appliqué à une zone au sein de la région, la zone définissant des indices tels qu'un caractère, une lettre, un numéro, un symbole, un élément graphique ou similaire.

6. Procédé selon l'une quelconque des revendications précédentes, dans lequel la région dans laquelle le matériau transparent durcissable est appliqué définit des indices tels qu'un caractère, une lettre, un nombre, un symbole, un élément graphique ou similaire.

7. Procédé selon l'une quelconque des revendications précédentes, dans lequel les étapes (d) et (e) sont réalisées simultanément, au moins en partie.

8. Procédé selon l'une quelconque des revendications précédentes, comprenant en outre, en tout point avant, pendant ou après les étapes (a) à (e) :
(x) l'application d'un revêtement au substrat en dehors de la région à laquelle le matériau transparent durcissable sera ou a été appliqué, le revêtement comprenant de préférence une ou plusieurs couches opacifiantes.

9. Procédé selon l'une quelconque des revendications précédentes, dans lequel le substrat est soit un substrat de document de sécurité, de préférence un substrat de billet de banque, de manière préférée entre toutes un substrat de billet de banque polymère, soit le substrat est un substrat d'article de sécurité, de préférence un substrat d'un fil, d'une bande, d'une pièce, d'une bande de transfert ou d'une étiquette de sécurité.
